# EUROPEAN PATENT SPECIFICATION

(11) **EP 3 992 363 B1**
(45) Date of publication and mention of the grant of the patent: **25.06.2025**
(21) Application number: 19934777.4
(22) Date of filing: 20.09.2019
(51) Int. Cl.: E01C 11/26

(54) **ROAD SURFACE HEATING DEVICE, METHOD FOR CONSTRUCTING SAME, METHOD FOR HEATING ROAD SURFACE, AND ROAD SURFACE HEATING SYSTEM**
VORRICHTUNG ZUR BEHEIZUNG VON STRASSENOBERFLÄCHEN, VERFAHREN ZU IHRER HERSTELLUNG, VERFAHREN ZUR BEHEIZUNG VON STRASSENOBERFLÄCHEN UND SYSTEM ZUR BEHEIZUNG VON STRASSENOBERFLÄCHEN
DISPOSITIF DE CHAUFFAGE DE SURFACE DE ROUTE, SON PROCÉDÉ DE CONSTRUCTION, PROCÉDÉ DE CHAUFFAGE DE SURFACE DE ROUTE ET SYSTÈME DE CHAUFFAGE DE SURFACE DE ROUTE

(30) Priority: 27.06.2019 JP 2019120172
(43) Date of publication of application: 04.05.2022
(73) Proprietor: Taiyo Co., Ltd., Minami-ku Saitama-shi Saitama 336-0026 (JP); Intron Co., Ltd., Toshima-ku Tokyo 170-0003 (JP)
(72) Inventor: KURAJI, Kentaro, Tokyo 100-8930 (JP); SOMEYA, Atsunori, Tokyo 100-8930 (JP); YAMAMOTO, Kazuki, Tokyo 100-8930 (JP); HIKICHI, Koyo, Tokyo 100-8930 (JP); MIYAMA, Daisuke, Tokyo 105-0001 (JP); SUZUKI, Masahiro, Tokyo 105-0001 (JP); CHOU, Kouhou, Tokyo 105-0001 (JP); MURAKAMI, Yoshisato, Tokyo 105-0001 (JP); ABE, Keisuke, Saitama-shi Saitama 336-0026 (JP); TATSUOKA, Akira, Toshima-ku Tokyo 170-0003 (JP)
(74) Representative: Hoffmann Eitle
(86) International application number: PCT/JP2019/037008
(87) International publication number: WO 2020/261589

(56) References cited:
- WO-A1-01/25540
- WO-A2-2010/107184
- CN-U- 202 047 335
- JP-A- 2005 146 575
- JP-A- 2007 040 010
- JP-A- 2007 231 655
- JP-A- 2007 231 655
- JP-A- 2014 201 937
- KR-A- 20180 082 861
- KR-B1- 100 923 663
- KR-B1- 101 027 275
- KR-B1- 101 409 678
- US-A- 5 573 687

## Description

### Technical Field

The present invention relates to a road surface heating device, a construction method of the road surface heating device, a road surface heating method, and a road surface heating system for elevating the temperature of a road surface.

### Background Art

In heavy snowfall areas, such as Hokkaido, Tohoku and Hokuriku areas, countermeasures against snow and freezing in winter have imposed very serious subjects in order to maintain regional activities in winter and to ensure the safety of local residents.

As a common countermeasure against snowfall, shoveling by using shovels has been carried out for snow removal, and industrial snow countermeasures include snow removing or excavating works by using heavy machineries and snow plows. In addition, road heating systems are sometimes used in highways of large vertical inclinations in order to prevent road surface from freezing (refer, for example, to JP 2001 81710 A).

For example, JP 2001 81710 A discloses a simple and less expensive anti-freezing and snow-melting road structure. In the antifreezing and snow-melting road structure, a far-infrared electric heating sheet 30 is interposed between a base layer 21 and a surface layer 22 of an asphalt pavement 20 of a road 1, a far-infrared element is disposed in the asphalt of the surface layer 22 and, further, a far-infrared lamps 40 are arranged in the shoulder of the road 1.

By electric current supply to the far infrared heating sheet 30, far infrared rays emitted from the far infrared heating sheet 30 are absorbed to the far infrared elements blended in the asphalt of the surface layer 22, so that the structure is simple and inexpensive, to prevent freezing and snow accumulation efficiently.

Further, since a far infrared lamp 40 installed at the shoulder of the road 1 emits far infrared rays toward the surface of the road 1, it is possible to melt the frozen surface and prevent snow from depositing on the road surface. Further, the far-infrared rays emitted from the far-infrared ray lamp 40 are irradiated to the far-infrared elements blended with the asphalt of the surface layer 22, so that the far-infrared rays emitted from the far-infrared sheet 30 can prevent road from freezing and snow from depositing on the surface efficiently, easily and inexpensively.

However, in order to bury the anti-freezing and snow-melting preventing structure disclosed in JP 2001 81710 A in an existent road, it is necessary to first dig out the load at the surface layer 22 covered with an asphalt or concrete pavement, and then fill back the far-infrared heating sheet 30 horizontally over the exposed base layer 21.

Thus, it is necessary to refill the excavated surface layer 22 of asphalt or concrete pavement. Therefore, not only a lot of construction works were required, but also this may hinder smooth road traffic.

Then, a road heating structure that can facilitate the installation of electric heating sheets and improve the melting efficiency for the road surface has been developed when the road heating structure is installed to the road (refer, for example, to JP 2007 231655 A).

For example, in the road surface heating structure of JP 2007 231655 A, each of containing grooves 11b is formed first in a direction perpendicular to the surface 11a of a road 11 made of concrete C, and a belt-shaped electric heating sheet 12 is buried in the containing groove 11b formed in a direction in perpendicular to the surface 11a. Next, by filling a gap between the inner surface of the containing groove 11b and the lateral surface of the electric heating sheet 12 with an insulative mortar 13, the electric heating sheet 12 is buried and fixed in the containing groove 11b.

This can eliminate the need of extraction work to bury the electric heating sheet in the road over a wide range. Since the containing groove 11b can be formed easily by a road cutter or the like, the belt-shaped electric heating sheet 12 can be contained easily and continuously over a long distance.

Further examples of previously known road surface heating devices, construction methods of such road surface heating devices, road surface heating methods, and/or road surface heating systems for elevating the temperature of a road surface are derivable from WO 01/25540 A1, which forms the basis for the two-part form of independent claims 1 and 26, KR 101 027 275 B1, WO 2010/107184 A2, JP 2007 231655 A, KR 2018 0082861 A, CN 2020 47335 U, JP 2005 146575 A, KR 100 923 663 Bl, US 5,573,687 A, as well as KR 101 409 678 Bl.

### Summary of the Invention

### Technical Problem

However, roads involve places tending to be frozen, easy to be covered with snow, and tend to remain snow. For example, roads on bridges tend to be frozen. Further, snow tends to remain in a place of the road that is always in the shade of buildings. In addition, such shade areas exist spotwise in the road, so that the environment of the road is not always uniform.

Even if roads under such varied environments are heated by burying long belt-shaped electric heating sheets as in JP 2007 231655 A, effect of thawing a frozen part and melting deposited snow may be attained only for a place where it is easy to freeze or where snow is easy to accumulate. However, in other places, the road is heated only in vain and to waste energy.

For solving the problem, it may be considered to adjust the temperature over the entire length of the road. However, even when the entire electric heating sheet is set to a high temperature in accordance with the state of freezing of road or remaining of snow that may occur depending on places, effects may be expected only in specific portions tending to cause road freezing of snow deposition.

On the contrary, if the temperature is adjusted depending the conditions on a place where freezing or snow remaining does not occur, this is not effective in other places where freezing or snow remaining may occur, and melting and thawing cannot be attained in the places where they are necessary.

In addition, since the road may expand or contract due to vibrations caused by automobiles and seasonal temperature differences, if an electric heating sheet is buried for a longtime in a road where vibrations or expansions and contractions always occur, the electric heating sheet may be damaged due to the vibrations and expansions or contractions of the road.

For example, when a belt-shaped electric heating sheet buried in a road over a long distance is disconnected even partially, this leads to entire failure due to vibrations or expansions and contractions of the road, and brings about a problem that the whole electric heating sheet can no more be heated.

Further, upon such failure, it is necessary to identify and repair a place of the failed place from the buried electric heating sheet, but it is very difficult to identify a failed place from the buried electric heating sheet. In order to recover the road heating, it is necessary to dig up all the electric heating sheets and then identify the point of the broken wire from the electric heating sheet, or to re-fill the new electric heating sheet entirely. Then, this will make maintenability very poor.

Furthermore, in order to dig up the buried electric heating sheet, it is necessary to close the traffic lane on one side during the day time repair work when there is a lot of traffic, which may hinder the traffic. In addition, it was difficult to perform a large-scale construction work because the work had to be carried out in the daytime while closing the track on one side or carried out in a limited time of the midnight with less traffic, making large-scale construction difficult.

The present invention has been achieved in view of the foregoings and intends to provide a road surface heating device, a method of constructing the road surface heating device, a road surface heating method, and a road surface heating system, capable of heating a road at a saved energy to provide excellent maintainability.

### Solution to Problem

For solving the above subjects, the present invention provides a road surface heating device for elevating the temperature of a road surface according to independent claim 1, a construction method of the road surface heating device according to independent claim 24, a road surface heating method according to independent claim 25, and/or a road surface heating system for elevating the temperature of a road surface according to independent claim 26.

Distinct embodiments are derivable from the dependent claims.

### Advantageous Effect of the Invention

According to the road surface heating device, the construction method of the road surface heating device, the road surface heating method, and the road surface heating system of the present invention, since a plurality of belt-shaped electric heating sheets are buried in each of the divisional sections where the construction section is divided into a plurality of sections, along the traveling direction of a road requiring heating, with the sheet plane being in perpendicular to the road surface, and the connection structure links the plurality of electric heating sheets and connecting them to a power supply, the controller controls the heating amount of the electric heating sheets connected to the connection structure in each of the divisional sections, the temperature for each of divisional sections can be controlled in which the construction section is divided into a plurality of sections. Further, since a plurality of electric heating sheets are buried in each of the divisional sections, it is sufficient to replace only the failed portion of the electric heating sheet, thereby improving maintainability.

### Brief Explanation of Drawings

FIG. 1 is a block diagram illustrating the concept of a road heating system according to a first embodiment of the invention;
FIG. 2 is a front elevational view showing details of an electric heating sheet according to the first embodiment;
Fig. 3 is a cross-sectional view of a road along the travelling direction showing the process of installing the electric heating sheet to the road;
FIG. 4 is a block diagram showing details of a controller;
FIG 5 is a top plan view and cross-sectional view of a road with a road heating system installed on a pier;
FIG. 6 is a cross sectional view showing a road heating system along the travelling direction;
FIG. 7 is a top plan view showing a road heating system installed in the vicinity of a tollbooth;
FIG. 8 shows a plurality of examples of a method of controlling divisional sections;
FIG. 9 is a block diagram illustrating the concept of a road heating system according to a second embodiment;
FIG. 10 is a front elevational view showing details of an electric heating sheet according to the second embodiment;
FIG. 11 is a front elevational view showing a state of connecting the electric heating sheet according to the second embodiment;
FIG. 12 is a front elevational view showing details of an electric heating sheet according to a third embodiment; and
FIG. 13 is a front elevational view illustrating a method of forming an electric heating sheet.

### Preferred Embodiments of the Invention

Preferred embodiments of the present invention will now be described in details with reference to the drawings.

### First Embodiment

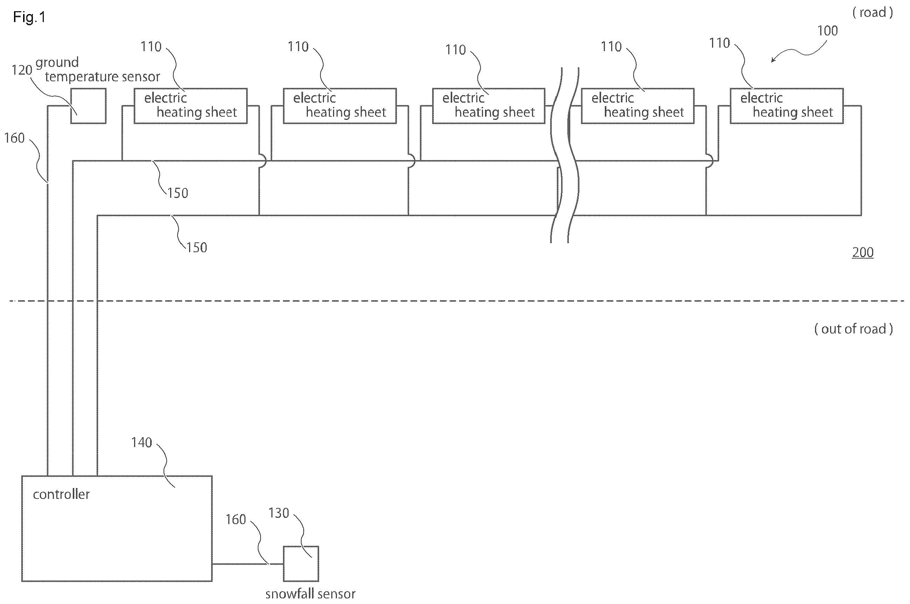

FIG. 1 is a block diagram showing the concept of a road heating system according to the first embodiment.

A road heating system 100 shown in FIG. 1 is for melting snowfall on the ground of a road, a sidewalk, a parking lot or the like, and preventing the ground surface from freezing. Hereinafter, the road heating system 100 will be described by way of an example in a case where the road heating system 100 is installed on an existing road 200, in particular, an exclusively used for automobile road such as a highway.

As shown in FIG. 1, the road heating system 100 includes electric heating sheets 110, a ground temperature sensor 120, a snowfall sensor 130, a controller 140, a power line 150, and a communication cable 160.

The electric heating sheet 110 is a belt-shaped heating element at a length of 2,000 mm and a height of 80 mm, and buried in a containing groove at a depth of 90 mm and a width of 24 mm formed vertically from the surface of the road 200, along the traveling direction of automobiles running on the road 200, so that the short side of the electric heating sheet 110 direct the vertical direction.

The electric heating sheet 110 generates heat from both sides of the electric heating sheet 110 by electric power supplied via the electric power line 150, and can melt snow falling on the road 200 and prevent freezing of the ground by heating at the periphery of the road 200 in contact with the electric heating sheet 110.

A plurality of the electric heating sheets 110 are installed in each of divisional sections formed by dividing a predetermined sections in a road 200 into a plurality of sections for constructing the road heating system 100.

As a specific example, in a case where a road heating system 100 is installed in a 3 km construction section, the electric heating sheets 110 are installed by an arbitrary number at a predetermined interval in a 30 m divisional section obtained by dividing the construction section into a number of 100. The electric heating sheets 110 are connected in parallel by the power lines 150. The distance and the number of divisions of the divisional sections and the number of electric heating sheets 110 buried in the divisional sections may be changed depending on the state of construction.

The ground temperature sensor 120 is a temperature sensor for measuring the temperature of the road 200 in which the electric heating sheets 110 are buried. The sensor is buried together with the electric heating sheet 110 in a containing groove that contains the electric heating sheet 110, and may detect to notify the temperature of the road 200 where the electric heating sheet is buried.

The ground temperature sensor 120 is installed at least by one in the divisional section, and detects and notifies the measured temperature of the road 200 to the controller 140 connected via a communication cable 160.

A ground temperature sensors 120 may be disposed in the vicinity of each of electric heating sheets 110 buried in plurality or at a predetermined interval in the divisional section, and may detect and notify the temperature in the vicinity of the buried ground temperature sensor 120.

The snowfall sensor 130 is a sensor for detecting snowfall and installed, for example, above the ground near the road 200 in which the electric heating sheets 110 are buried. Specifically, it may be fixed to a sound proof wall or a guardrail disposed near the road 200.

Examples of the snowfall sensor 130 include a moisture detection type sensor having an external atmospheric temperature measuring means and a moisture detection means for determining snowfall based on the acquired external atmospheric temperature and moisture, an infrared detection type sensor for detecting snow as an obstacle by irradiating infrared rays, etc.

The snowfall sensor 130 is installed at least by one in the divisional section and notifies the presence or absence of snowfall or the amount of snowfall to the controller 140 connected via a communication cable 160. Further, the snowfall sensor 130 may be installed at least by one each at a predetermined interval in the divisional section, and may detect the presence or absence of snowfall or the amount of snowfall each in the vicinity of the installed snowfall sensor 130.

In the controller 140, a plurality of electric heating sheets 110 are connected via a power line 150, and a ground temperature sensor 120 and a snowfall sensor 130 are connected via respective communication cables 160, and the controller 140 is operated by receiving electric power supplied from a power supply such as a commercial power supply not shown.

Specifically, the controller 140 acquires the temperature of the road 200 from the ground temperature sensor 120 connected via the communication cable 160, detects the presence or absence of snowfall and the amount of snowfall from a snowfall sensor 130 connected via the communication cable 160, and controls the amount of power supplied to the electric heating sheet 110.

For example, when the ground temperature sensor 120 detects a temperature below a predetermined level, for example, 5°C, the electric power supply to the electric heating sheet 110 is started, whereby the electric heating sheet 110 generates heat, to heat the road 200 that surrounds the electric heating sheet 110.

Thus, the road 200 can be prevented from freezing. Alternatively, electric power supply to the electric heating sheet 110 may be controlled depending on the temperature of the road 200 detected by the ground temperature sensor 120 to keep the temperature of the road 200 constant.

When the snowfall sensor 130 detects snowfall or judges that the amount of snowfall tends to increase, power supply to the electric heating sheet 110 is started, to generate heat from the electric heating sheet 110, and heat the peripheral road 200 where the electric heating sheet 110 is buried to prevent snowfall on the road 200 from remaining.

The controller 140 may also be connected to other controllers 140 installed in other divisional sections (not shown) by way of the communication cable 160, and a plurality of controllers 140 connected by the communication cable 160 may be connected to a network such as an internet (not shown) by way of a wiring or in a wireless manner, to control each of controllers 140 from the outside by a terminal device such as a computer connected to the network such as the internet.

The power line 150 serves to connect the electric heating sheet 110 and the controller 140, and transmit the electric power supplied from the controller 140 to the electric heating sheet 110, and comprises, for example, a heat resistant, water resistant and flexible cab tire cable.

The communication cable 160 serves to transmit information by a wiring mode such as an optical fiber cable or a LAN (local area network) cable. In this embodiment, the ground temperature sensor 120 and the snowfall sensor 130 are connected to the controller 140 via the communication cables 160. In addition, the ground temperature sensor 120 and the snowfall sensor 130 may be connected in a wireless manner to the controller 140 by using a short-range wireless communication technology.

As described above, in the road heating system 100 of this embodiment, a plurality of electric heating sheets 110 are buried in divisional sections formed by dividing a predetermined section of constructing the road heating system 100 in the road 200 into a plurality of sections, and the controller 140 can control the operation of the electric heating sheets 110 on each of the divisional sections. Accordingly, the temperature can be controlled on each of the divisional sections. Thus, the electric heating sheet 110 no more generates heat in a part where heating of the road 200 is unnecessary, so that the energy efficiency is improved.

Further, since the electric heating sheets 110 are connected in parallel between the power lines 150, if one of the electric heating sheets 110 installed in plurality should happen be disconnected partially by vibrations or expansions and contractions of the road 200 due to earthquake or automobile traffic, and heat can be generated from other heating sheets 110.

In addition, since the electric heating sheet 110 no more generates heat due to disconnection or the like, causing no temperature elevation, location of the disconnected electric heating sheet 110 can be easily identified from the outside, and by replating the electric heating sheet 110, it is necessary to excavate only the failed portion and replace the disconnected electric heating sheets 110 (for about 2,000 mm or more), so that the maintainability can be improved.

Further, when the controller 140 having the electric heating sheets 110 connected in parallel is provided with a power supply detection means or a leakage detection means, and the location of the disconnected electric heating sheets 110 can be specified without confirming the temperature from the outside. In addition, when the electric heating sheet 110 is no longer energized, the power supply detecting means may notify warning to an administrator or the like.

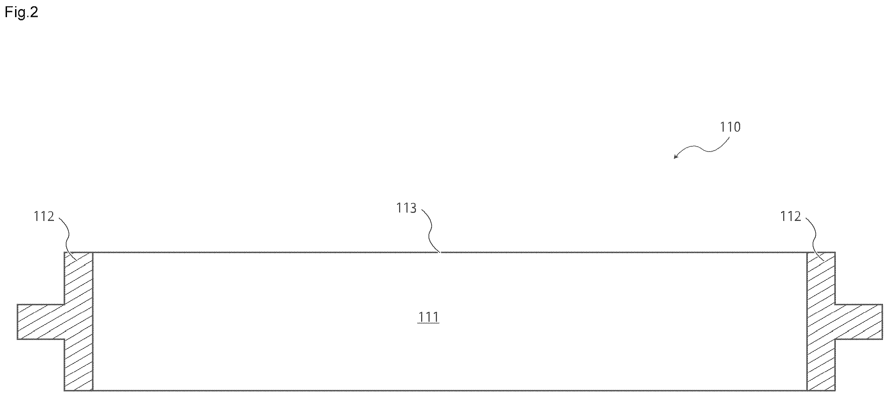

FIG. 2 is a front elevational view showing details of the electric heating sheet according to the first embodiment.

As shown in FIG. 2, the electric heating sheet 110 is a belt-shaped rectangular heating element at a length of 2,000 mm, a height of 80 mm, and a thickness of 1 mm, and includes a heating part 111, electrode parts 112, and a protective sheet part 113.

The heating part 111 is a rectangular sheet-like heating strip that generates heat upon voltage supply. The heating part 111 is made of Japanese paper mixed with carbon fibers, which generates heat not by gathering electric wires like an existent metal wire heater, but generates heat uniformly from a sheet-like heating part 111 under voltage supply, so that the whole of the heating part 111 generates heat not from the wires but from the surface.

Since the road 200 in contact with the heating part 111 is warmed for a wider planar shape, the amount of heat generated by the heating part 111 can be transmitted efficiently to the road 200. Ice and snow deposited on the surface of the road 200 can be melted by warming the road 200. It is also possible to prevent snow from accumulating to the surface of the road 200 thereby preventing the surface of the road 200 from freezing.

The electrode parts 112 are terminals provided on both longitudinal ends of the heating part 111, and include an anode and a cathode for passing a current to the heating part 111. The electrode parts 112 are connected in parallel to the controller 140 by a power line 150 (not shown). By connecting the electric heating sheets 110 in parallel with the controller 140 in this manner, even if the electric heating sheets 110 are partially disconnected, the road 200 can be heated without stopping heat generation from other electric heating sheets 110.

Since the damaged electric heating sheets 110 can be replaced sheet by sheet, it may suffice to excavate the road 200 only at a portion where the damaged electric heating sheet 110 is buried, only the damaged electric heating sheet 110 needs to be replaced, so that the amount of repair work and maintenance work can be decreased to improve the maintainability.

The protective sheet part 113 comprises a film material for protecting the electric heating sheet 110 and a connection part between the electric heating sheet 110 and the electrode part 112, which is a water resistant, heat resistant and impact resistant strong film material comprising, for example, polyethylene terephthalate, and is crimped between both sides by the protective sheet parts 113 so as to sandwich the electric heating sheet 110 and the connection part between the electric heating sheet 110 and the electrode parts 112.

Also, butyl rubber of excellent heat resistance, cold resistance, weather resistance, water resistance or the like can be used for the protective sheet part 113.

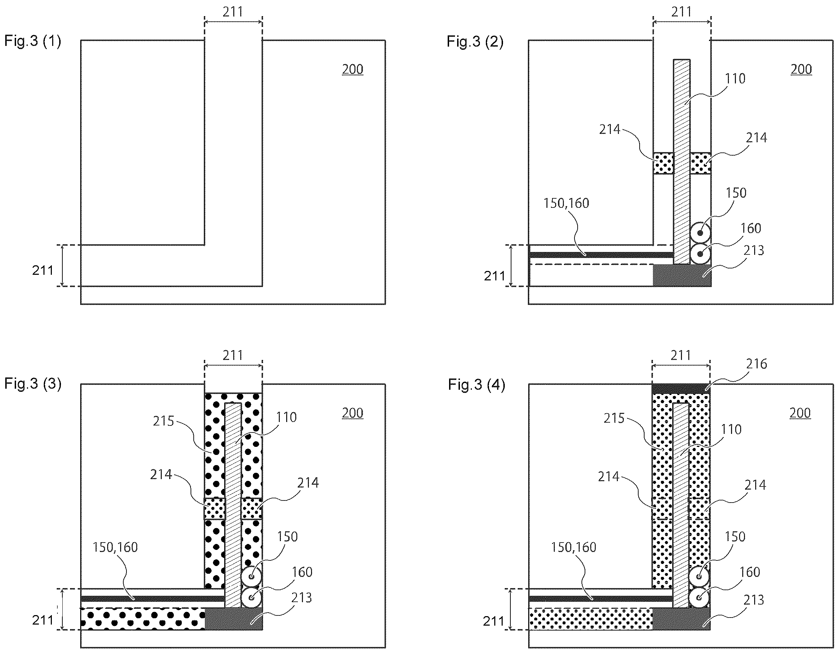

FIG. 3 is a cross sectional view of a road in the traveling direction that shows steps of installing an electric heating sheet in the road.

FIG. 3(1) shows a state of forming a electric heating sheet containing groove 211 for electric heating sheets 110 and a cable containing groove 212 burying for a power line 150 and a communication cable 160 in a road 200.

The electric heating sheet containing groove 211 is formed of a groove at 90 mm depth × 24 mm width in a road 200 along a traveling direction of the road 200 by using a road cutter or the like in a section where the road heating system 100 is constructed.

As a place to form the electric heating sheet containing groove 211, two electric heating sheet containing grooves 211 are preferably formed by two tracks (ruts) for one lane in the road 200 where automobiles run frequently. Thus, since the road 200 is warmed along the tracks (ruts) where the automobiles run frequently, snowfall and freezing of the road 200 can be prevented mainly around the tracks, to improve the safety of the automobiles running along the road 200.

Even if the white lines drawn on the road 200 become invisible due to snowfall, since the electric heating sheets 110 are buried along the tracks (ruts) on which the automobiles run frequently, so that snow deposition and freezing of the road 200 around the tracks (ruts) can be prevented on the road 200 by the heat generation of the electric heating sheets 110, so that the tracks can be clearly shown to automobile drivers, to improve the safety of the automobiles running on the road 200.

The cable containing grooves 212 are formed each at 90 mm depth × 24 mm width in a road 200 by a road cutter or the like in a direction traversing the road 200 along each of divisional sections formed by dividing a construction section.

For example, when the road heating system 100 is provided for a 3 km construction section and the construction section is divided into 100 sections with the divisional section be formed 30 m, a cable containing groove 212 is formed on every 30 m divisional section.

FIG. 3(2) shows a state of containing electric heating sheets 110, a power line 150, and a communication cable 160 in an electric heating sheet containing groove 211 and a cable containing groove 212 formed in the road 200.

First, a heat insulating material 213 is filled to the bottom of an electric heating sheet containing groove 211 formed in a road 200 along a longitudinal direction of the electric heating sheet containing groove 211. The heat insulating material 213 serves to prevent heat generated by the electric heating sheet 110 from escaping downward below the road 200, that is, downward, from the bottom of the electric heating sheet containing groove 211.

The heat insulating material 213 is formed, for example, of a material excellent in heat insulation and water resistance such as polystyrene foam or cellulose fiber. By installing the heat insulating material 213 having such heat insulative and water resistant nature by 10 to 30 mm from the bottom of the electric heating sheet containing groove 211, it is possible to prevent downward heat conduction to a road foundation of a steel floor slab, a concrete floor slab or a road foundation structural part of a bridge structure showing high heat loss, thereby improving the horizontal heat conduction of the road 200.

Next, the electric heating sheet 110 is inserted in the electric heating sheet containing groove 211 so that the short side direction of the electric heating sheet 110 is in the vertical direction. The electric heating sheet 110 is installed such that the upper end is not exposed from the surface of the road 200. In addition, a ground temperature sensor 120 (not shown in the drawing) is also disposed at an arbitrary location in the same manner as the electric heating sheet 110 in the electric heating sheet containing groove 211.

Since the height of the electric heating sheet 110 is 80 mm relative to the 90 mm depth of the electric heating sheet containing groove 211, the lower end of the electric heating sheet 110 may also be buried in the heat insulating material 213 disposed at the bottom of the electric heating sheet containing groove 211.

When the electric heating sheet 110 is located in the electric heating sheet containing groove 211, a support 214 may be inserted preferably into the gap between the electric heating sheet 211 and the electric heating sheet containing groove 211, so that the electric heating sheet 110 is fixed at the center of the electric heating sheet containing groove 110.

The support 214 is formed by hardening a material identical with the joint material 215 to be filled in a gap between the electric heating sheet 110 and the electric heating sheet containing groove 211 subsequently, and is formed in such a shape as not hinder the filling of the joint material 215 in a gap between the electric heating sheet 110 and the electric heating sheet containing groove 211.

The support 214 is, for example, a solid rod or a plate member having a sufficient width to fill the gap between the electric heating sheet 110 and the electric heating sheet containing groove 211, and is installed in a gap between the electric heating sheet 110 and the electric heating sheet containing groove 211 at a predetermined interval. Since the support 214 is formed of the same material as the joint material 215, it is subsequently integrated with the joint material 215.

Also the power line 150 connected to the electric heating sheet 110 and the communication cable 160 connected to the ground temperature sensor 120 may be wired along the electric heating sheet containing groove 211, and then gathered in the cable containing grooves 212, and then provided on both ends of the divisional section.

Preferably, the power line 150 and the communication cable 160 may be inserted through a flexible conduit made of a synthetic resin such as a CD (Combined Duct) pipe in advance and then installed in the electric heating sheet containing groove 211 and the cable containing groove 212.

FIG. 3(3) shows a state of filling a joint material 215 in a gap between the electric heating sheet 110 and the electric heating sheet containing groove 211.

The joint material 215 comprises an elastic, insulative, and water proof material, for example, a urethane rubber of hydroxy terminated polybutadiene, which is, preferably, liquid at the time of filling and cured later to show strength and flexibility, and is filled in the gap between the electric heating sheet 110 and the electric heating sheet storage groove 211 and the cable containing groove 212.

The joint material 215 that is a urethane rubber comprising hydroxy terminated polybutadiene shows high workability in a liquid state upon filling the gap between the electric heating sheet 110 and can provide the electric heating sheet containing groove 211, and high flexibility and strength after curing.

Therefore, when compared with a case of filing the gap between the electric heat sheet 110 and the electric heating sheet containing groove 211 with mortar, since the joint material 215 of high flexibility can correspond to the expansion and contraction of the road 200 due to vibration and the temperature difference flexibly, so that the damages of the electric heating sheet 110 caused by expansion and contraction of the road 200 due to the vibration and the temperature difference can be reduced.

Furthermore, if the electric heating sheet 110 is buried in the traffic track (ruts) in the road on which the automobiles runs, since the joint material 215 absorbs the vibrations of the automobiles, the damage of the electric heating sheet 110 can be reduced even for a road at large traffic amounts, and the electric heating sheet 110 can be used for a long time.

The support 214 is formed by curing a urethane rubber comprising hydroxy terminated polybutadiene as a joint material 215, and the joint material 215 is cured to integrate the joint material 215 and the support 214.

Since the joint material 215 is resistant to calcium chlorides used as an antifreezing agent or a snow melting agent, it is possible to prevent the joint material 215 from deterioration by the snow melting agent, the antifreezing agent or the like scattered on the road 200 and invading into the electric heating sheet containing groove 211.

In addition, by incorporating high latent heat melting material such as sodium acetate trihydrate or sodium sulfate 10-hydrate in the joint material 215 to improve the heat storability of the joint material 215. When the joint material has high heat storability, temperature keeping performance is improved, and the road 200 can be heated at a saved energy.

In addition to incorporation of a material having a high latent heat of melting in the joint material 215, a highly heat storing material may be provided between the electric heating sheet 110 and the road 200, or between the electric heating sheet 110 and the joint material 215, so that the heat generated from the electric heating sheet 110 may be stored in the highly heat storing material.

FIG. 3(4) shows a state of laying a surface material 216 to the upper end of the joint material 215 filled in the electric heating sheet containing groove 211.

The uppermost surface of the joint material 215 filled in the electric heating sheet containing groove 211 is filled to be lower than the surface of the road 200, and the surface material 216 is laid so as to be in flash with the surface of the road 200 by filling the step difference.

The surface material 216 comprises, for example, silica sand, and a material harder than the joint material 215 is laid over the upper end of the joint material 215 filled in the electric heating sheet containing groove 211. The surface material 216 can adsorb to the joint material 215 by scattering to the upper end of the joint material before the hardening of the material.

The surface material 216 harder than the joint material 215 is laid on the upper end of the elastic joint material 215, peeling and abrasion of the joint material 215 caused by running of automobiles can be prevented, to protect the electric heating sheet 110.

In this embodiment, the electric heating sheets 110 has been explained as having a length of 2,000 mm and a height of 80 mm. However, it can be explained, for example, such that the electric heating sheet 110 has 2,000 mm length x 80 mm height and the electric heating sheet containing groove 211 has 90 mm depth x 90 mm height and 24 mm height. However, they can be constructed by optionally adjusting the size, for example, such that the electric heating sheet 110 has 100 mm to 5,000 mm of length, 40 mm to 80 mm of height and 9 mm to 24 mm of width, and the electric heating sheet containing groove 211 has 50 mm to 90 mm of depth.

Specifically, by reducing the height of the electric heating sheet 110, or increasing the depth of the electric heating sheet containing groove 211, thereby burying the electric heating sheet 110 below the surface layer 200 by 30 mm to 50 mm in the road 110, so that the asphalt can be peeled in repair work with no effect on the road heating system 100.

Further, by coloring the joint material 215 filled in a gap between the electric heating sheet 110 and the electric heating sheet containing groove 211 and the joint material 215 to be filled in the cable containing groove 212 with a color, such as white or yellow which is visually distinguishable from the road 200, it is possible to clarify a portion where the electric heating sheet 110 is buried upon excavating the road 200, for example, during asphalt repair working.

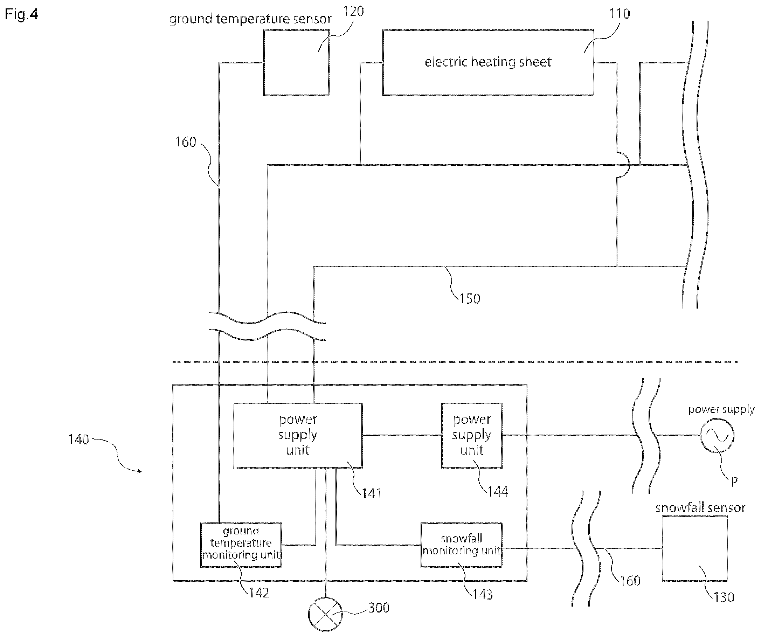

FIG. 4 is a block diagram showing details of the controller.

As shown in FIG. 4, the controller 140 has a power supply unit 141, a ground temperature monitoring unit 142, a snowfall monitoring unit 143, and a power supply unit 144.

The power supply unit 141 is connected to a ground temperature monitoring unit 142, a snowfall monitoring unit 143, the power supply unit 144, an electric heating sheet 110, a network 300, and is in connection with other controller 140 and serves to adjust the amount of power supplied to the electric heating sheet 110 connected therewith.

The ground temperature monitoring unit 142 is connected to the ground temperature sensor 120, detects the temperature of the road 200 in which the electric heating sheet 110 is buried, to monitor the temperature thereof.

The ground temperature monitoring unit 142 monitors the temperature of the road 200 and, when the temperature of the road 200 is lower than a predetermined temperature, the ground temperature monitoring unit 142 transmits a signal for increasing the temperature of the road 200 to a power supply unit 141, and the power supply unit 141 increases the amount of electric power supplied to the electric heating sheet 110.

Further, the ground temperature monitoring unit 142 monitors the temperature of the road 200 and when it reaches a predetermined temperature, the ground temperature monitoring unit 142 transmits a signal to the power supply unit 141 for maintaining the temperature of the road 200, and the power supply unit 141 reduces the amount of electric power supplied to the electric heating sheet 110.

The snowfall monitoring unit 143 is connected to a snowfall sensor 130, and the snowfall sensor 130 detects a state of snowfall on a place where the snowfall sensor unit is installed for monitoring the state of snowfall.

A snowfall monitoring unit 143 monitors the state of snowfall in the road 200 on which the snowfall sensor 130 is installed and, when the snowfall sensor 130 detects snowfall or when the snowfall monitoring unit 143 judges that the snowfall amount tends to increase, the snowfall sensor 130 transmits, a signal for increasing the temperature of the road 200 to a power supply unit 141, and the power supply unit 141 increases the amount of electric power supplied to the electric heating sheet 110.

Thus, the power supply unit 141 can supply an accurate amount of electric power to the electric heating sheet 110 based on the signals transmitted from the ground temperature sensor 120 and the snowfall monitoring unit 143.

The power supply unit 141 may be connected to other controllers 140 installed in other divisional sections by communication cables 160. A plurality of controllers 140 connected by the communication cables 160 may be connected to a network such as an internet (not shown), and each of the controllers 140 can be controlled from the outside by using a terminal equipment such as a computer connected to the network such as an internet.

**The** power supply unit 144 is connected to the power supply unit 141 and a commercial power source P installed near the road 200, and serves to supply electric power obtained from a commercial power source P via the power supply unit 141 to each of devices constituting the road heating system 100. The commercial power supply P may be available from electric power obtained by natural energy source such as a solar panel or wind power generation, or electric power generated from a generator using a fuel such as gasoline, in addition to electric power available from existent electric power companies.

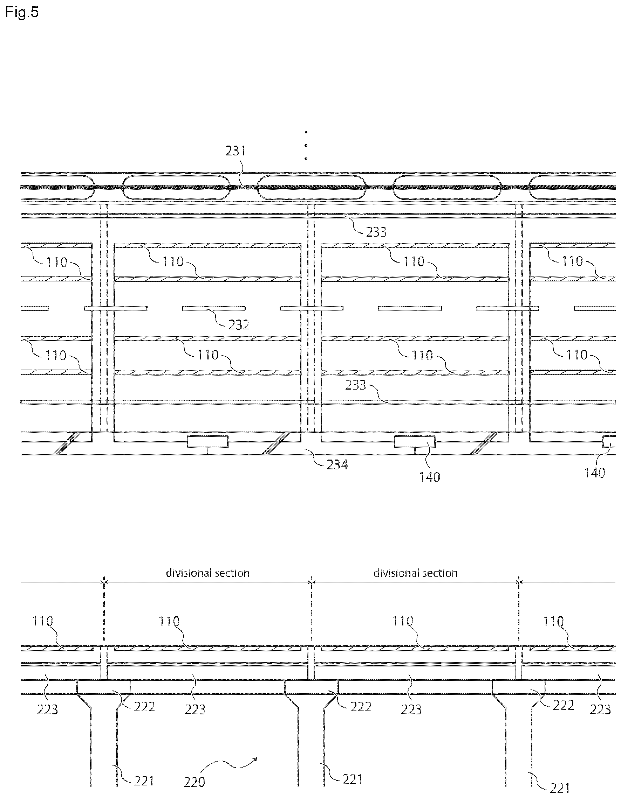

FIG. 5 is a top plan view and a cross-sectional view showing a state of road heating system installed to a road formed on bridge piers.

As shown in the cross-sectional view of FIG. 5, a bridge pier 220 comprises columns 221 disposed each at a predetermined interval, beams 222 disposed over columns 221, and a floor plates 223 made of concrete or steel, and disposed on two adjacent beams 222. The road 200 is formed on a floor board 223.

As shown in the top plan view of FIG. 5, the road 200 has two lanes on each side of a median strip 231, each lane is demarcated by a roadway centerline 232, and the roadway and shoulder or the roadway and the median 231 are demarcated by the roadway outside line 233 on the side opposite to the roadway centerline 232 of each lane. On the outside of the road 200, there are formed walls 234 such as wall balustrades to preventing falling of people, automobiles, and the like from the bridge, and noise preventive sound proof walls.

The electric heating sheets 110 are buried in track portion where automobiles run on each lane. Further, since the joint between the floor boards 223 tends to undergo the effect of the expansions and contractions of the road 200 due to the vibration of the road 200 and the temperature difference, the joint material is inserted for joining the floor boards 223, the divisional section for burying the electric heating sheet 110 may be provided so as not to cross the joint as shown in the top plan view of FIG. 5. The controller 140 and the snowfall sensor 130 may be provided, for example, on the wall 234.

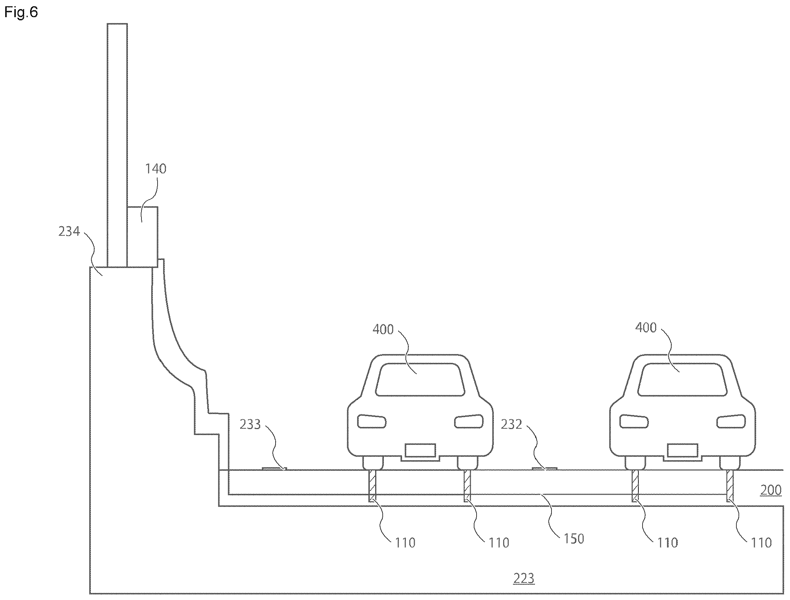

FIG. 6 is a cross sectional view showing the state of providing the road heating system in the automobile traveling direction.

As shown in FIG. 6, the electric heating sheets 110 are buried in two rows, for example, along tire tracks (ruts) where the tire and the road 200 are usually in contact each other during running of the automobiles 400, for example, between roadway center line 232 and the roadway outside line 233.

Thus, since the road 200 is warmed mainly around the track traces (ruts) where the automobiles 400 frequently run, snow accumulation and the freezing of the road 200 can be prevented to improve the safety of the road 200.

A plurality of the electric heating sheets 110 buried in the road 200 are connected via power lines 150 to the controller 140 fixed to the wall 234. The ground temperature sensor 120 for measuring the temperature of the road 200 where the electric heating sheets 110 are buried is also connected to the controller 140 fixed to the wall 234 via the communication cable 160.

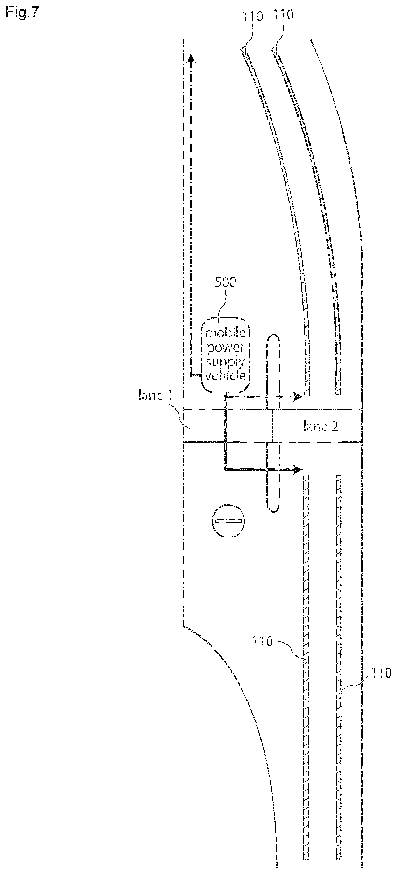

FIG. 7 is a top plan view showing the state of the road heating system installed in the vicinity of a tollgate.

As shown in FIG. 7, in the vicinity of the tollgate, the electric power can be supplied to the road heating system 100 by using a mobile power supply vehicle 500 having a diesel engine or a gas turbine-driven generator loaded instead of a commercial power source P.

For example, in the tollgate, an optional lane among a plurality of lanes is closed to stop a power supply vehicle 500, the power supply unit 144 of the controller 140 is connected and the power supply vehicle 500, and the power generated by the power supply vehicle 500 is supplied to the road heating system 100.

Thus, by using the mobile power supply vehicle 500, the road heating system 100 can be used even in a case of a power failure caused, for example, by a disaster, and the safety of the road 200 can be maintained.

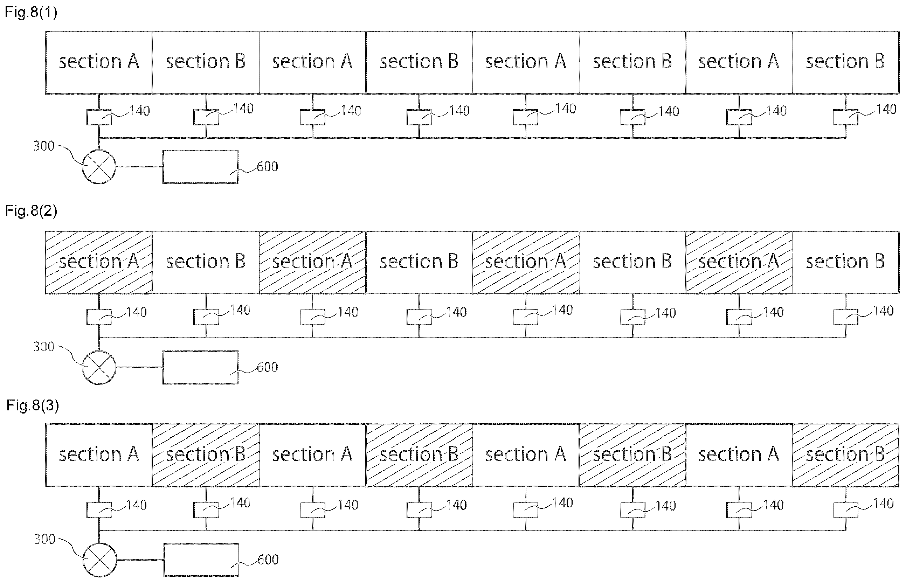

FIG. 8 is a diagram showing an example for the method of controlling a plurality of divisional sections.

As shown in FIG. 8(1), a plurality of electric heating sheets 110 are buried in each of the divisional sections of the road 200, and the buried electric heating sheets 110 are connected to one controller 140 for control. Each of the controllers 140 is connected to other controllers 140 via a network 300 such as an internet, and each of the controllers 140 is controlled by a computer 600 connected to the network 300.

A plurality of controllers 140 installed in a road 200 are configured so as to allocate the two groups of the section A and the section B, and the allocated sections A and the sections B are connected alternately.

First as shown in FIG. 8(2), upon starting operation of the road heating system 100, the divisional sections each allocated as the section A are heated first. Specifically, the controllers 140 supply electric power to the electric heating sheets 110 buried in the divisional sections allocated as the sections A.

Next, as shown in FIG. 8(3), the divisional sections allocated as the section B are heated. Specifically, the controller 140 supplies electric power to the electric heating sheets 110 buried in each of the divisional sections and allocated as the sections B.

As shown in FIGS. 8(2) and 8(3), by alternately heating the sections A and the sections B thereby performing the heating in the sections A and in the sections B at an interval, for example, of about 5 or 10 minutes, it is possible to reduce the power supply in the initial stage of snowfall to one-half.

Further, a plurality of controllers 140 installed to the road 200 may be configured to be assigned to three groups of sections A, sections B, and sections C, and the assigned sections A, sections B, and sections C are sequentially connected to each other, so that the power load of the power supply can be reduced to 1/3 by heating each of groups in rotation.

In this embodiment, the electric heating sheet containing groove 211 is formed in the existing road 200 and the electric heating sheets 110 are buried in the electric heating sheet containing groove 211. Instead, in a case of newly constructing a road, electric heating sheets 110 previously surrounded with the joint material 215 may also be provided in a road.

### Second Embodiment

Next, a second embodiment of the invention will be described. The road heating system 100 of the second embodiment is substantially similar to the configuration of the first embodiment excepting that the method of connecting the electric heating sheets 110 is different from the connection method for heating sheets 110. For this reason, components that are substantially identical with those in the first embodiment are denoted by the same reference numerals, for which description will be omitted as a rule.

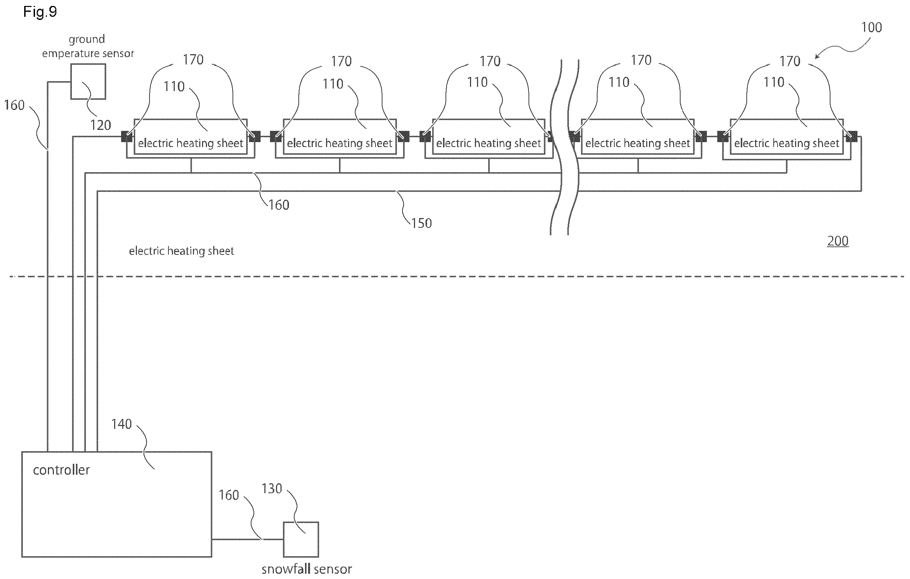

FIG. 9 is a block diagram showing the concept of a road heating system according to the second embodiment.

As shown in FIG. 9, the road heating system 100 includes electric heating sheets 110, a ground temperature sensor 120, a snowfall sensor 130, a controller 140, a power line 150, a communication cable 160, and a current monitoring unit 170.

A plurality of electric heating sheets 110 are buried at a predetermined interval in each of the divisional sections, and respective electric heating sheets 110 are connected in series by a power line 150. Note that the distance and the number of divisions for the divisional sections and the number of electric heating sheets 110 buried in each of the divisional sections may be varied depending on the state of construction.

A power supply monitoring unit 170 is provided straddling each of the electric heating sheets 110 for monitoring the state of power supply to the electric heating sheet 110, and the power supply monitoring unit 170 periodically confirms whether the corresponding electric heating sheet 110 is correctly supplied with power or not, and notifies the result of the check to a controller 140 connected via a communication cable 160 (not shown).

If the power supply monitoring unit 170 detects that the electric heating sheet 110 is not energized, a signal informing that the electric heating sheet 110 corresponding to the controller 140 is not energized is immediately reported, and the controller 140 informs a manager that the electric heating sheet 110 is not energized through the network 300.

If one of the electric heating sheets 110 connected in series no more supplies power, the entire divisional section cannot be heated. However, since the energization monitoring unit 170 can periodically monitor the power supply state and can identify that the electric heating sheet 110 is in failure, only the portion of the not energized heating sheet 110 can be found and repaired or replaced, so that the maintainability can be improved greatly as compared with the conventional case.

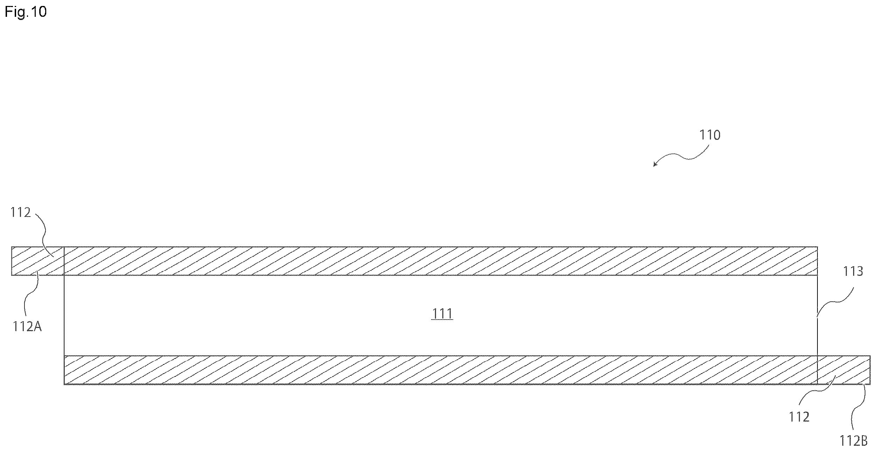

FIG. 10 is a front elevational view showing details of the electric heating sheet according to the second embodiment of the invention.

As shown in FIG. 10, the electric heating sheet 110 is a rectangular belt-shaped heating element at 2,000 mm length x 80 mm height x 1 mm thickness, and includes a heating part 111, electrode parts 112, and sheet protective parts 113.

The electrode parts 112 are terminals formed continuously along the upper and lower ends in the longitudinal direction of the heating part 111, and has an anode and a cathode for passing a current to the heating part 111. The electrode parts 112 are connected in series to the controller 140 by a power line 150 (not shown).

In the following explanatory, the electrode part 112 protruding from the left of the upper end of the electric heating sheet 110 is referred to as the electrode part 112A, and the electrode part 112 protruding from the right of the lower end of the electric heating sheet 110 is referred to as the electrode part 112B.

Since the electric heating sheets 110 can be replaced sheet by sheet for a failed portion identified by the power supply monitoring unit 170, it is necessary that the road 200 may be excavated only for a portion where the failed electric heating sheet 110 is buried and that only the failed electric heating sheet 110 is replaced or repaired, maintenance work can be reduced to improve the maintainability.

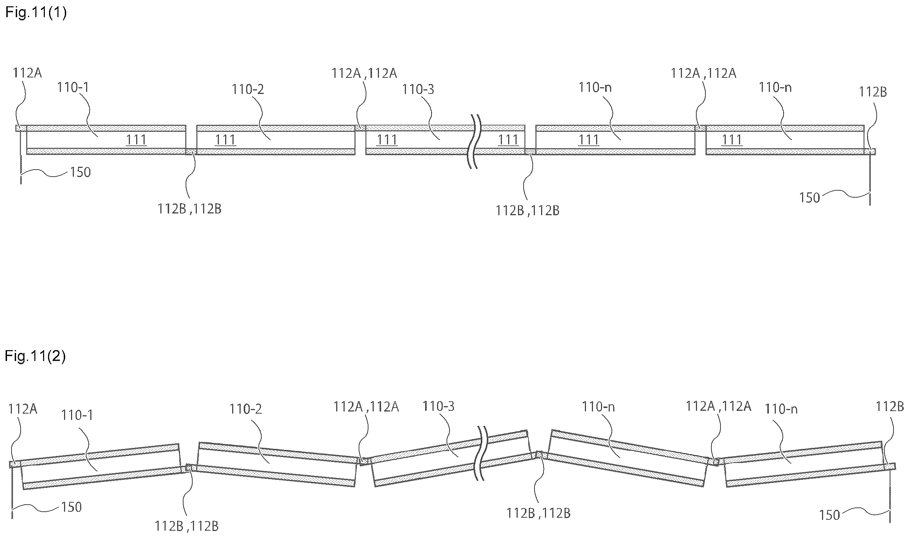

FIG. 11 is a front elevational view showing a state of connecting electric heating sheets according to the second embodiment.

As shown in FIG. 11(1), respective electric heating sheets 110 are connected in series and connected via a power line 150 to a (not shown) controller 140. The power supply monitoring unit 170 is not illustrated.

As a specific connection example, a power supply unit 141 of the controller 140 is connected via a power line 150 to the electrode part 112A of the electric heating sheet 112. The electrode part 112B of the electric heating sheet 111-1 is connected to the electrode 112B of the electric heating sheet 110-2B in a state of turning the electric heating sheet 110 upside down.

Further, the electrode part 112A of the electric heating sheet 110-2 is connected to the electrode part 112A of the electric heating sheet 110-3 such that the upper and the lower surfaces of the electric heating sheet 110 are reversed upside downs and connected to the electrode part 112A of the electric heating sheet 110. Thus, the voltage can be divided depending on the resistance.

In this state, in the electric heating sheet 110-1, a current flows from the electrode part 112A to the electrode part 112B to generate heat in the heating part 111 and, in the electric heating sheet 110-2, a current flows from the electrode part 112B to the electrode part 112A to generate heat in the electric heating sheet 111.

Further, as shown in FIG. 11(2), by connecting the electrode part 112A and the electrode part 112A or connecting the electrode part 112B and the electrode part 112B each at an angle, the electric heating sheets 110 can be installed in accordance with the unevenness or inclination of the road.

Specifically, the road is inclined in the vicinity of a tollgate, an entrance, etc., of an expressway, and the electric heating sheet 110 can be connected in accordance with the inclination and the unevenness of the road by connecting the connecting part of the electrode part 112 at an angle.

In this embodiment, the road heating system 100 has been described as having the power supply monitoring unit 170 and the communication cable 160. Alternately, the road heating system 100 excluding the power supply monitoring unit 170 and the communication cable 160 connecting the power supply monitoring unit 170 and the controller 140 may be buried in the road 200.

By saving the power supply monitoring unit 170 and the communication cable 160, since the volume of the power supply monitoring unit 170 and the communication cable provided in the electric heating sheet containing groove 211 and the cable containing groove 212 can be reduced, the formed electric heating sheet containing groove 211 and the cable containing groove 212 can be reduced at least to the volume capable of containing the electric heating sheet 110.

Thus, since the working time for excavating the electric heating sheet containing groove 211 and the cable containing groove 212 in the road 200 can be decreased, it can cope with the short-time construction which is required during a limited midnight work in the construction state.

### Third Embodiment

Next, a third embodiment of the invention will be described. The road heating system 100 of this embodiment is substantially similar to the configuration of the second embodiment excepting that the method of forming the electric heating sheet 110 is different. Then, components substantially similar to those of the second embodiment are denoted by the same reference numerals, without particularly mentioning them.

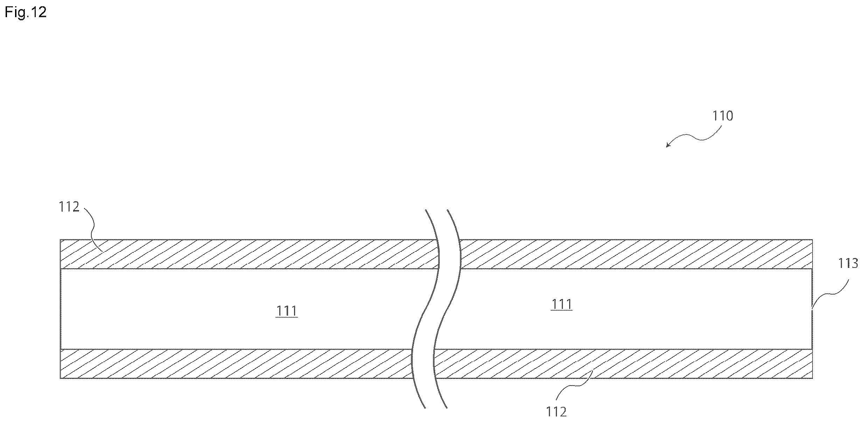

FIG. 12 is a front elevational view showing details of an electric heating sheet according to the third embodiment.

As shown in FIG. 12, the electric heating sheet 110 is a rectangular belt-shaped heating element having a 80 mm height x a 3 ~ 7 mm thickness x an arbitrary length, including a heating part 111, electrode parts 112, and protective sheet parts 113. For example, the electric heating sheet 110 is formed to several tens or hundreds meters of length, and can be carried to the working site in a rolled state or the like.

The electrode parts 112 are terminals provided on both ends of the heating part 111, and have an anode side and a cathode side for passing a current to the heating part 111. By forming upper and lower recesses to the electrode part 112 to form notches in the heating sheet 110, the same state as that where the heating sheet 110 according to the second embodiment is connected in series can be formed. Details will be described later.

The protective sheet part 113 is made of protective material for protecting the electric heating sheet 110 and a connection part between the electric heating sheet 110 and the electrode part 112, and is made of a material having a thickness of about 2 mm, excellent in flexibility, heat resistance, cold resistance, weather resistance, water resistance, etc., comprising, for example, butyl rubber, and is bonded from both sides by protective sheet parts 113 so as to sandwich the electric heating sheet 110 and the connection part between the electric heating sheet 110 and the electrode part 112. By protecting another surface of the protective sheet part 113 with releasable paper or the like, it is possible to prevent the protective sheet part 113 from adhering to other parts.

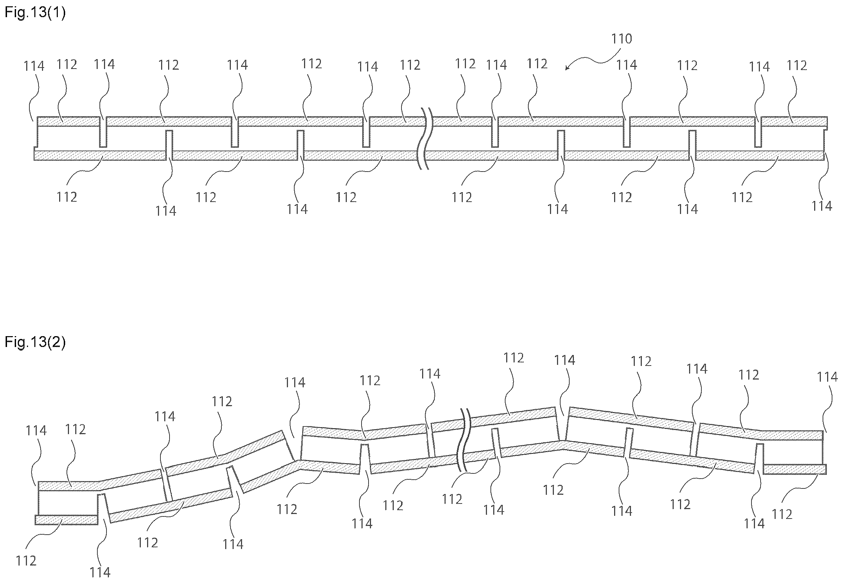

FIG. 13 is a front elevational view showing a method of forming an electric heating sheet.

As shown in FIG. 13(1), an electric heating sheet 110 formed in an arbitrary length includes notches 114.

The notches 114 are formed at arbitrary places depending on the conditions of the road where the road heating system 100 is installed, and the notched parts 114 are formed in the electric heating sheet 110 so as to cut only one electrode part 112 from the upper direction or the lower direction of the electrode part 112.

A specific installation method of the electric heating sheets 110 will be described below.

First, an electric heating sheet 110 formed of an arbitrary length in a rolled state or the like is cut in accordance with the length of an electric heating sheet containing groove 211 to be installed.

Then, notches 114 are formed to the electric heating sheet 110. The notches 114 are formed such that one side of the electrode part 112 is exposed on both ends of the cut electric heating sheet 110, and the notches are formed in the electric heating sheet 110 so as to cut the electrode part 112 from above or below. As a result, the same state as that where the electric heating sheets 110 according to the second embodiment of the invention are connected in series, so that the voltage can be divided depending on the resistance of the electric heating sheets 110.

Further, the power from the electric heating sheets 110 can be varied also by increasing or decreasing the number of notches 114 formed in the electric heating sheet 110. More specifically, by reducing the number of the notches 114, the electric resistance value of the entire electric heating sheet 110 is reduced, so that the power of the electric heating sheet 110 can be increased. Further, by increasing the number of the notches 114, the electric resistance value of the entire electric heating sheet 110 is increased, so that the power for the electric heating sheet 110 can be reduced.

As described above, by adjusting the number of the notches 114 formed in the electric heating sheet 110, it is possible to construct the system corresponding appropriately to any type of power supply such as DC or AC, and at a voltage, for example, of 12 V, 24 V, 48 V, 100 V, 200 V, and 400 V.

Further, as shown in FIG. 13(2), by forming each of the notches 114 to the electric heating sheet 110, the electric heating sheet 112 can be curved near the electrode 112 connected by the formed notch 114. Thus, the electric heating sheets 110 can be installed in accordance with irregularity and inclination of the road.

Further, since the electric heating sheet 110 can be cut in accordance with the electric heating sheet containing groove 211 formed in the road, and the notches 114 are formed to the recessed electric heating sheet 110, the adaptability to the construction site can be improved.

In order to form the notches 114, the notches 114 each having a predetermined shape can be formed to the electric heating sheet 110 by preparing a punching die formed by a die or the like in advance. Thus, the notches 114 each in a uniform shape can be formed on the electric heating sheet 110, to improve the stability of construction quality.

### [Reference Signs List]

100 Road heating system
110 Electric heating sheet
120 Ground temperature sensor
130 Snowfall sensor
140 Controller
150 Power line
160 Communication cable
200 Road

## Claims

1. A road surface heating device for elevating the temperature of a road surface including:
a plurality of belt-shaped electric heating sheets (110) buried in divisional sections of the road (200), with a plane of the sheet being in perpendicular to the road surface, and
a connection structure for linking the plurality of electric heating sheets (110) and connecting them to a power source (P), and
a controller (140) for controlling the amount of heating of the electric heating sheets (110) connected to the connection structure in each of divisional sections,
**characterized in that**
the electric heating sheets (110) comprise Japanese paper blended with carbon fibers and **in that** the belt-shaped electric heating sheets (110) are buried in said divisional sections along the travelling direction of the road (200).

2. The road surface heating device according to claim 1, including:
a snowfall detection means for detecting snowfall, where
the controller (140) controls the heating amount of the electric heating sheets (110) according to the presence or absence of snowfall or the amount of snowfall detected by the snowfall detection means.

3. The road surface heating device according to claim 1, including
a ground temperature detection means for detecting the temperature of a road (200) where the electric heating sheets (110) are buried, and
the controller (140) for adjusting the heating amount of the electric heating sheets (110) to the temperature of the road (200) detected by a ground temperature detection means.

4. The road surface heating device according to claim 1, wherein
the connection structure is a parallel connection structure where the electric heating sheets (110) are connected in parallel to the power source (P).

5. The road surface heating device according to claim 4, wherein
each of the electric heating sheets (110) includes:
electrode parts (112) connected in parallel to the end of the shorter side of the heating sheet.

6. The road surface heating device according to claim 1, wherein
the connection structure is a serial connection structure, including:
the electric heating sheets (110) connected in series and
a power supply monitoring unit (170) for monitoring power supply to the heating sheets connected in series.

7. The road surface heating device according to claim 6, wherein
the heating sheet has:
an upper end electrode part provided at an upper end in the longitudinal direction of the electric heating sheet (110), and
a lower end electrode part provided at a lower end in the longitudinal direction of the heating sheets, connected in series to each other.

8. The road surface heating device according to claim 7, wherein
the serial connection structure includes:
a long electric heating sheet (110) formed in accordance with the construction section,
a plurality of notches (114) formed to the long electric heating sheet (110),
the notches (114) having:
upper end notches including the upper end electrode portion, and
the lower end notched cutout while including the lower end electrode portion formed alternately.

9. The road surface heating device according to claim 8, wherein
the output from the divisional electric heating sheet (110) divided by the notches (114) from the long heating sheets is varied by the amount of the notches (114).

10. The road surface heating device according to claim 1, including:
means for heating alternately electric heating sheets (110) buried in the divisional sections on each of the divided sections.

11. The road surface heating device according to claim 1, wherein
the electric heating sheets (110) buried along a track trace of a road (200) where automobiles usually run.

12. The road surface heating device according to claim 1, wherein
a shock absorber material having elasticity for absorbing vibrations and expansions and contractions of the road (200) is located between the road (200) and the electric heating sheet (110).

13. The road surface heating device according to claim 12, wherein
the shock absorber material comprises a water proof rubber material.

14. The road surface heating device according to claim 12, wherein
the surface layer of the shock absorber material comprises a hard surface material (216).

15. The road surface heating device according to claim 14, wherein
the surface layer of the shock absorber material comprises silica sand bonded to the surface layer of the shock absorber material.

16. The road surface heating device according to claim 12, wherein
the electric heating sheet (110) is contained in a containing groove (211) formed, in a direction perpendicular to the surface of an existent road (200), and
a support member for vertically supporting the electric heating sheet (110) is contained in the containing groove (211), and
the shock absorber material is filled between the containing groove (211) and the electric heating sheet (110).

17. The road surface heating device according to claim 16, wherein
the support member is formed of the same material as the shock absorber material.

18. The road surface heating device according to claim 12, wherein
the shock absorber material has a color distinguishable from the color of the road (200).

19. The road surface heating device according to claim 12, including:
a heat storing means for storing an amount of heat generated from the electric heating sheet (110).

20. The road surface heating device according to claim 1, wherein
the lower end of the electric heating sheet (110) has a heat insulating means for preventing downward heat radiation from the electric heating sheet (110).

21. The road surface heating device according to claim 1, wherein
a water proof, heat and impact resistant protective material is provided on the peripheral surface of the Japanese paper for protecting the Japanese paper.

22. The road surface heating device according to claim 21, wherein
the protective material is a flexible butyl rubber further having flexibility.

23. The road surface heating device according to claim 1, wherein
the electric heating sheet (110) is buried below the surface layer to be peeled when the surface layer of the road (200) is peeled and repaired.

24. A method of constructing a road surface heating device for elevating the temperature of the road surface, including:
a step of burying a plurality of belt-shaped electric heating sheets (110), which comprise Japanese paper blended with carbon fibers, in divisional sections where a construction section is divided into a plurality of sections, along the traveling direction of the road (200) requiring heating, with the sheet plane being in perpendicular to the road surface,
a step of linking a plurality of electric heating sheets (110) and connecting them to a power source, and
a step of linking a plurality of heating sheets to a controller (140) that controls the amount of heat from the electric heating sheets (110) in each of divisional sections connected to the connection structure; and
a step of connecting the controller (140) for controlling the amount of heat generated from the electric heating sheets (110) in each of the divisional sheets.

25. A road surface heating method for elevating the temperature of a road surface, including:
a step of burying a plurality of belt-shaped electric heating sheets (110), which comprise Japanese paper blended with carbon fibers, along divisional sections where the construction section is divided into a plurality of sections, along the traveling direction of the road (200) requiring heating, with a sheet plane being in perpendicular to the road surface,
a step of connecting a plurality of electric heating sheets (110) and connecting them to a power source (P);
a step of connecting the controller (140) for controlling the heating amount of the electric heating sheets (110) connected to the connection structure in each of the divisional sections; and
a step of controlling the heating amount of the electric heating sheets (110) connected to the connection structure by the controller (140).

26. A road surface heating system for elevating the temperature of a road surface, including:
a plurality of belt-shaped electric heating sheets (110) buried in divisional sections, along the traveling direction of the road (200) in which a construction section is divided into a plurality of sections, with a sheet plane being in perpendicular to the road surface;
a connection structure for connecting the plurality of electric heating sheets (110) to a power source (P); and
a controller (140) for controlling the heating amount of the electric heating sheets (110) connected to the connection structure in each of the divisional sections; and
a power source mobile vehicle for supplying electric power to the connection structure,
wherein
the electric heating sheets (110) comprise Japanese paper blended with carbon fibers.

## Patentansprüche

1. Vorrichtung zur Beheizung von Straßenoberflächen zum Erhöhen der Temperatur einer Straßenoberfläche, einschließend:
eine Vielzahl von riemenförmigen elektrischen Heizfolien (110), die in unterteilten Sektionen der Straße (200) vergraben sind, wobei eine Ebene der Folie senkrecht zur Straßenoberfläche ist, und
eine Verbindungsstruktur zum Verknüpfen der Vielzahl von elektrischen Heizfolien (110) und zu ihrem Verbinden mit einer Leistungsquelle (P), und
eine Steuereinheit (140) zum Steuern der Heizmenge der elektrischen Heizfolien (110), die mit der Verbindungsstruktur in jeder der unterteilten Sektionen verbunden sind,
**dadurch gekennzeichnet, dass**
die elektrischen Heizfolien (110) Japanpapier umfassen, das mit Kohlenstofffasern gemischt ist, und dadurch, dass die riemenförmigen elektrischen Heizfolien (110) in den unterteilten Sektionen entlang der Fahrtrichtung der Straße (200) vergraben sind.

2. Vorrichtung zur Beheizung von Straßenoberflächen nach Anspruch 1, einschließend:
ein Schneefalldetektionsmittel zum Detektieren von Schneefall, wobei
die Steuereinheit (140) die Heizmenge der elektrischen Heizfolien (110) gemäß dem Vorhandensein oder Nichtvorhandensein von Schneefall oder der von dem Schneefalldetektionsmittel detektierten Menge an Schneefall steuert.

3. Vorrichtung zur Beheizung von Straßenoberflächen nach Anspruch 1, einschließend
ein Bodentemperaturdetektionsmittel zum Detektieren der Temperatur einer Straße (200), wo die elektrischen Heizfolien (110) vergraben sind, und
die Steuereinheit (140) zum Anpassen der Heizmenge der elektrischen Heizfolien (110) an die von einem Bodentemperaturdetektionsmittel detektierte Temperatur der Straße (200).

4. Vorrichtung zur Beheizung von Straßenoberflächen nach Anspruch 1, wobei
die Verbindungsstruktur eine Parallelverbindungsstruktur ist, bei der die elektrischen Heizfolien (110) parallel zu der Leistungsquelle (P) verbunden sind.

5. Vorrichtung zur Beheizung von Straßenoberflächen nach Anspruch 4, wobei
jede der elektrischen Heizfolien (110) Folgendes einschließt:
Elektrodenteile (112), die parallel zu dem Ende der kürzeren Seite der Heizfolie verbunden sind.

6. Vorrichtung zur Beheizung von Straßenoberflächen nach Anspruch 1, wobei
die Verbindungsstruktur eine Reihenverbindungsstruktur ist, einschließend:
die elektrischen Heizfolien (110), die in Reihe verbunden sind, und
eine Leistungsversorgungsüberwachungseinheit (170) zum Überwachen der Leistungsversorgung der in Reihe verbundenen Heizfolien.

7. Vorrichtung zur Beheizung von Straßenoberflächen nach Anspruch 6, wobei
die Heizfolie Folgendes aufweist:
einen oberen Endelektrodenteil, der an einem oberen Ende in der Längsrichtung der elektrischen Heizfolie (110) bereitgestellt ist, und
einen unteren Endelektrodenteil, der an einem unteren Ende in der Längsrichtung der Heizfolien bereitgestellt ist, in Reihe miteinander verbunden.

8. Vorrichtung zur Beheizung von Straßenoberflächen nach Anspruch 7, wobei
die Reihenverbindungsstruktur Folgendes einschließt:
eine lange elektrische Heizfolie (110), die in Übereinstimmung mit der Konstruktionssektion gebildet ist,
eine Vielzahl von Kerben (114), die an der langen elektrischen Heizfolie (110) gebildet sind,
wobei die Kerben (114) Folgendes aufweisen:
obere Endkerben, die den oberen Endelektrodenabschnitt einschließen, und
den eingekerbten unteren Endausschnitt, während sie den unteren Endelektrodenabschnitt einschließen, abwechselnd gebildet.

9. Vorrichtung zur Beheizung von Straßenoberflächen nach Anspruch 8, wobei
die Ausgabe aus der unterteilten elektrischen Heizfolie (110), die durch die Kerben (114) aus den langen Heizfolien unterteilt wird, durch die Menge der Kerben (114) variiert wird.

10. Vorrichtung zur Beheizung von Straßenoberflächen nach Anspruch 1, einschließend:
Mittel zum abwechselnden Heizen von elektrischen Heizfolien (110), die in den unterteilten Sektionen auf jeder der unterteilten Sektionen vergraben sind.

11. Vorrichtung zur Beheizung von Straßenoberflächen nach Anspruch 1, wobei
die elektrischen Heizfolien (110) entlang einer Fahrbahnspur einer Straße (200) vergraben sind, auf der normalerweise Kraftfahrzeuge fahren.

12. Vorrichtung zur Beheizung von Straßenoberflächen nach Anspruch 1, wobei
sich ein Stoßabsorptionsmaterial, das Elastizität aufweist, um Vibrationen und Ausdehnungen und Kontraktionen der Straße (200) zu absorbieren, zwischen der Straße (200) und der elektrischen Heizfolie (110) befindet.

13. Vorrichtung zur Beheizung von Straßenoberflächen nach Anspruch 12, wobei
das Stoßabsorptionsmaterial ein wasserfestes Gummimaterial umfasst.

14. Vorrichtung zur Beheizung von Straßenoberflächen nach Anspruch 12, wobei
die Oberflächenschicht des Stoßabsorptionsmaterials ein hartes Oberflächenmaterial (216) umfasst.

15. Vorrichtung zur Beheizung von Straßenoberflächen nach Anspruch 14, wobei
die Oberflächenschicht des Stoßabsorptionsmaterials Quarzsand umfasst, der an die Oberflächenschicht des Stoßabsorptionsmaterials gebunden ist.

16. Vorrichtung zur Beheizung von Straßenoberflächen nach Anspruch 12, wobei
die elektrische Heizfolie (110) in einer enthaltenden Nut (211) enthalten ist, die in einer Richtung senkrecht zur Oberfläche einer existierenden Straße (200) gebildet ist, und
ein Trägerglied zum vertikalen Tragen der elektrischen Heizfolie (110) in der enthaltenden Nut (211) enthalten ist, und
das Stoßabsorptionsmaterial zwischen der enthaltenden Nut (211) und der elektrischen Heizfolie (110) eingefüllt ist.

17. Vorrichtung zur Beheizung von Straßenoberflächen nach Anspruch 16, wobei
das Trägerglied aus dem gleichen Material wie das Stoßabsorptionsmaterial gebildet ist.

18. Vorrichtung zur Beheizung von Straßenoberflächen nach Anspruch 12, wobei
das Stoßabsorptionsmaterial eine Farbe aufweist, die von der Farbe der Straße (200) unterscheidbar ist.

19. Vorrichtung zur Beheizung von Straßenoberflächen nach Anspruch 12, einschließend:
ein Wärmespeichermittel zum Speichern einer von der elektrischen Heizfolie (110) erzeugten Wärmemenge.

20. Vorrichtung zur Beheizung von Straßenoberflächen nach Anspruch 1, wobei
das untere Ende der elektrischen Heizfolie (110) ein Wärmeisolationsmittel aufweist, um eine Wärmeabstrahlung von der elektrischen Heizfolie (110) nach unten zu verhindern.

21. Vorrichtung zur Beheizung von Straßenoberflächen nach Anspruch 1, wobei
ein wasserdichtes, hitze- und stoßfestes Schutzmaterial auf der peripheren Oberfläche des Japanpapiers zum Schützen des Japanpapiers bereitgestellt ist.

22. Vorrichtung zur Beheizung von Straßenoberflächen nach Anspruch 21, wobei
das Schutzmaterial ein flexibles Butylgummi ist, das weiter Flexibilität aufweist.

23. Vorrichtung zur Beheizung von Straßenoberflächen nach Anspruch 1, wobei
die elektrische Heizfolie (110) unter der abzuziehenden Oberflächenschicht vergraben ist, wenn die Oberflächenschicht der Straße (200) abgezogen und repariert wird.

24. Verfahren zur Herstellung einer Vorrichtung zur Beheizung von Straßenoberflächen zum Erhöhen der Temperatur der Straßenoberfläche, einschließend:
einen Schritt des Vergrabens einer Vielzahl von riemenförmigen elektrischen Heizfolien (110), die mit Kohlenstofffasern gemischtes Japanpapier umfassen, in unterteilten Sektionen, in denen eine Konstruktionssektion in eine Vielzahl von Sektionen unterteilt ist, entlang der Fahrtrichtung der Straße (200), die Heizen erfordert, wobei die Folienebene senkrecht zur Straßenoberfläche ist,
einen Schritt des Verknüpfens einer Vielzahl von elektrischen Heizfolien (110) und des Verbindens derselben mit einer Leistungsquelle, und
einen Schritt des Verknüpfens einer Vielzahl von Heizfolien mit einer Steuereinheit (140), die die Wärmemenge von den elektrischen Heizfolien (110) in jeder der mit der Verbindungsstruktur verbundenen unterteilten Sektionen steuert; und
einen Schritt des Verbindens der Steuereinheit (140) zum Steuern der Wärmemenge, die von den elektrischen Heizfolien (110) in jeder der unterteilten Folien erzeugt wird.

25. Verfahren zur Beheizung von Straßenoberflächen zum Erhöhen der Temperatur einer Straßenoberfläche, einschließend:
einen Schritt des Vergrabens einer Vielzahl von riemenförmigen elektrischen Heizfolien (110), die mit Kohlenstofffasern gemischtes Japanpapier umfassen, entlang von unterteilten Sektionen, in denen die Konstruktionssektion in eine Vielzahl von Sektionen unterteilt ist, entlang der Fahrtrichtung der Straße (200), die Heizen erfordert, wobei eine Folienebene senkrecht zur Straßenoberfläche ist,
einen Schritt des Verbindens einer Vielzahl von elektrischen Heizfolien (110) und des Verbindens derselben mit einer Leistungsquelle (P);
einen Schritt des Verbindens der Steuereinheit (140) zum Steuern der Heizmenge der elektrischen Heizfolien (110), die mit der Verbindungsstruktur in jeder der unterteilten Sektionen verbunden sind; und
einen Schritt des Steuerns der Heizmenge der elektrischen Heizfolien (110), die mit der Verbindungsstruktur verbunden sind, durch die Steuereinheit (140).

26. System zur Beheizung von Straßenoberflächen zum Erhöhen der Temperatur einer Straßenoberfläche, einschließend:
eine Vielzahl von riemenförmigen elektrischen Heizfolien (110), die in unterteilten Sektionen entlang der Fahrtrichtung der Straße (200) vergraben sind, in der eine Konstruktionssektion in eine Vielzahl von Sektionen unterteilt ist, wobei eine Folienebene senkrecht zur Straßenoberfläche ist;
eine Verbindungsstruktur zum Verbinden der Vielzahl von elektrischen Heizfolien (110) mit einer Leistungsquelle (P); und
eine Steuereinheit (140) zum Steuern der Heizmenge der mit der Verbindungsstruktur verbundenen elektrischen Heizfolien (110) in jeder der unterteilten Sektionen; und
ein mobiles Fahrzeug mit einer Leistungsquelle zum Liefern von elektrischer Leistung an die Verbindungsstruktur,
wobei die elektrischen Heizfolien (110) Japanpapier umfassen, das mit Kohlenstofffasern gemischt ist.

## Revendications

1. Dispositif de chauffage de surface de route pour augmenter la température d'une surface de route incluant :
une pluralité de feuilles (110) chauffantes électriques en forme de bande enfouies dans des sections de division de la route (200), un plan de la feuille étant perpendiculaire à la surface de route, et
une structure de connexion pour relier la pluralité de feuilles (110) chauffantes électriques et les connecter à une source d'alimentation (P), et
un dispositif de commande (140) pour commander la quantité de chauffage des feuilles (110) chauffantes électriques connectées à la structure de connexion dans chacune des sections de division,
**caractérisé en ce que**
les feuilles (110) chauffantes électriques comprennent du papier Japon mélangé avec des fibres de carbone et **en ce que** les feuilles (110) chauffantes électriques en forme de bande sont enfouies dans lesdites sections de division le long de la direction de déplacement de la route (200).

2. Dispositif de chauffage de surface de route selon la revendication 1, incluant :
un moyen de détection de chute de neige pour détecter une chute de neige, dans lequel le dispositif de commande (140) commande la quantité de chauffage des feuilles (110) chauffantes électriques en fonction de la présence ou de l'absence d'une chute de neige ou de la quantité de chute de neige détectée par le moyen de détection de chute de neige.

3. Dispositif de chauffage de surface de route selon la revendication 1, incluant
un moyen de détection de température au sol pour détecter la température d'une route (200) où les feuilles (110) chauffantes électriques sont enfouies, et
le dispositif de commande (140) pour ajuster la quantité de chauffage des feuilles (110) chauffantes électriques à la température de la route (200) détectée par un moyen de détection de température au sol.

4. Dispositif de chauffage de surface de route selon la revendication 1, dans lequel
la structure de connexion est une structure de connexion parallèle où les feuilles (110) chauffantes électriques sont connectées en parallèle à la source d'alimentation (P).

5. Dispositif de chauffage de surface de route selon la revendication 4, dans lequel
chacune des feuilles (110) chauffantes électriques inclut :
des parties électrode (112) connectées en parallèle à l'extrémité du côté le plus court de la feuille chauffante.

6. Dispositif de chauffage de surface de route selon la revendication 1, dans lequel
la structure de connexion est une structure de connexion série, incluant :
les feuilles (110) chauffantes électriques connectées en série et
une unité (170) de surveillance d'alimentation électrique pour surveiller l'alimentation électrique des feuilles chauffantes connectées en série.

7. Dispositif de chauffage de surface de route selon la revendication 6, dans lequel
la feuille chauffante présente :
une partie électrode d'extrémité supérieure fournie à une extrémité supérieure dans la direction longitudinale de la feuille (110) chauffante électrique, et
une partie électrode d'extrémité inférieure fournie à une extrémité inférieure dans la direction longitudinale des feuilles chauffantes, connectées entre elles en série.

8. Dispositif de chauffage de surface de route selon la revendication 7, dans lequel
la structure de connexion série inclut :
une longue feuille (110) chauffante électrique formée conformément à la section de construction,
une pluralité d'encoches (114) formées sur la longue feuille (110) chauffante électrique,
les encoches (114) présentant :
des encoches d'extrémité supérieure incluant la partie électrode d'extrémité supérieure, et
la découpe entaillée d'extrémité inférieure tout en incluant la partie électrode d'extrémité inférieure formées en alternance.

9. Dispositif de chauffage de surface de route selon la revendication 8, dans lequel
la sortie de la feuille (110) chauffante électrique de division divisée par les encoches (114) à partir des longues feuilles chauffantes varie en fonction de la quantité des encoches (114).

10. Dispositif de chauffage de surface de route selon la revendication 1, incluant :
un moyen pour chauffer en alternance les feuilles (110) chauffantes électriques enfouies dans les sections de division sur chacune des sections de division.

11. Dispositif de chauffage de surface de route selon la revendication 1, dans lequel
les feuilles (110) chauffantes électriques sont enfouies le long d'une trace de voie de circulation d'une route (200) où circulent habituellement des automobiles.

12. Dispositif de chauffage de surface de route selon la revendication 1, dans lequel
un matériau amortisseur présentant une élasticité pour absorber les vibrations et les dilatations et contractions de la route (200) est situé entre la route (200) et la feuille (110) chauffante électrique.

13. Dispositif de chauffage de surface de route selon la revendication 12, dans lequel
le matériau amortisseur comprend un matériau en caoutchouc étanche à l'eau.

14. Dispositif de chauffage de surface de route selon la revendication 12, dans lequel
la couche de surface du matériau amortisseur comprend un matériau (216) de surface dur.

15. Dispositif de chauffage de surface de route selon la revendication 14, dans lequel
la couche de surface du matériau amortisseur comprend un sable de silice lié à la couche de surface du matériau amortisseur.

16. Dispositif de chauffage de surface de route selon la revendication 12, dans lequel
la feuille (110) chauffante électrique est contenue dans une rainure de rétention (211) formée, dans une direction perpendiculaire à la surface d'une route existante (200), et
un organe de support pour soutenir verticalement la feuille (110) chauffante électrique est contenu dans la rainure de rétention (211), et
le matériau amortisseur est introduit entre la rainure de rétention (211) et la feuille (110) chauffante électrique.

17. Dispositif de chauffage de surface de route selon la revendication 16, dans lequel
l'organe de support est formé du même matériau que le matériau amortisseur.

18. Dispositif de chauffage de surface de route selon la revendication 12, dans lequel
le matériau amortisseur présente une couleur pouvant être distinguée de la couleur de la route (200).

19. Dispositif de chauffage de surface de route selon la revendication 12, incluant :
un moyen de stockage de chaleur pour stocker une quantité de chaleur générée par la feuille (110) chauffante électrique.

20. Dispositif de chauffage de surface de route selon la revendication 1, dans lequel
l'extrémité inférieure de la feuille (110) chauffante électrique présente un moyen d'isolation thermique pour empêcher un rayonnement de chaleur vers le bas à partir de la feuille (110) chauffante électrique.

21. Dispositif de chauffage de surface de route selon la revendication 1, dans lequel
un matériau protecteur résistant à l'eau, à la chaleur et aux chocs est fourni sur la surface périphérique du papier Japon pour protéger le papier Japon.

22. Dispositif de chauffage de surface de route selon la revendication 21, dans lequel
le matériau protecteur est un caoutchouc butyle flexible présentant en outre une flexibilité.

23. Dispositif de chauffage de surface de route selon la revendication 1, dans lequel
la feuille (110) chauffante électrique est enfouie sous la couche de surface à peler lorsque la couche de surface de la route (200) est pelée et réparée.

24. Procédé de construction d'un dispositif de chauffage de surface de route pour augmenter la température de la surface de route, incluant :
une étape d'enfouissement d'une pluralité de feuilles (110) chauffantes électriques en forme de bande, qui comprennent un papier Japon mélangé avec des fibres de carbone, dans des sections de division où une section de construction est divisée en une pluralité de sections, le long de la direction de déplacement de la route (200) nécessitant un chauffage, le plan de feuille étant perpendiculaire à la surface de route,
une étape de liaison d'une pluralité de feuilles (110) chauffantes électriques et de connexion de celles-ci à une source d'alimentation, et
une étape de liaison d'une pluralité de feuilles chauffantes à un dispositif de commande (140) qui commande la quantité de chaleur provenant des feuilles (110) chauffantes électriques dans chacune des sections de division connectées à la structure de connexion ; et
une étape de connexion du dispositif de commande (140) pour commander la quantité de chaleur générée à partir des feuilles (110) chauffantes électriques dans chacune des feuilles de division.

25. Procédé de chauffage de surface de route pour augmenter la température d'une surface de route, incluant :
une étape d'enfouissement d'une pluralité de feuilles (110) chauffantes électriques en forme de bande, qui comprennent un papier Japon mélangé avec des fibres de carbone, le long de sections de division où la section de construction est divisée en une pluralité de sections, le long de la direction de déplacement de la route (200) nécessitant un chauffage, un plan de feuille étant perpendiculaire à la surface de route,
une étape de connexion d'une pluralité de feuilles (110) chauffantes électriques et de connexion de celles-ci à une source d'alimentation (P) ;
une étape de connexion du dispositif de commande (140) pour commander la quantité de chauffage des feuilles (110) chauffantes électriques connectées à la structure de connexion dans chacune des sections de division ; et
une étape de commande de la quantité de chauffage des feuilles (110) chauffantes électriques connectées à la structure de connexion par le dispositif de commande (140).

26. Système de chauffage de surface de route pour augmenter la température d'une surface de route, incluant :
une pluralité de feuilles (110) chauffantes électriques en forme de bande enfouies dans des sections de division, le long de la direction de déplacement de la route (200) dans laquelle une section de construction est divisée en une pluralité de sections, un plan de feuille étant perpendiculaire à la surface de route ;
une structure de connexion pour connecter la pluralité de feuilles (110) chauffantes électriques à une source d'alimentation (P) ; et
un dispositif de commande (140) pour commander la quantité de chauffage des feuilles (110) chauffantes électriques connectées à la structure de connexion dans chacune des sections de division ; et
un véhicule mobile de source d'énergie pour fournir de l'énergie électrique à la structure de connexion,
dans lequel les feuilles (110) chauffantes électriques comprennent un papier Japon mélangé avec des fibres de carbone.
